Europäisches Patentamt

(19) European Patent Office

Office européen des brevets

(11) Veröffentlichungsnummer: **0 126 985**
**B1**

(12) # EUROPÄISCHE PATENTSCHRIFT

(45) Veröffentlichungstag der Patentschrift:
24.06.87

(51) Int. Cl.⁴: **F 02 P 17/00, G 01 M 15/00**

(21) Anmeldenummer: **84104683.2**

(22) Anmeldetag: **26.04.84**

(54) **Adapter zwischen einem Millimeterwellen-Sensor und einer handelsüblichen Zündkerze, insbesondere zur OT-Messung bei Otto-Motoren.**

(30) Priorität: **05.05.83 DE 3316400**

(43) Veröffentlichungstag der Anmeldung:
**05.12.84 Patentblatt 84/49**

(45) Bekanntmachung des Hinweises auf die Patenterteilung:
**24.06.87 Patentblatt 87/26**

(84) Benannte Vertragsstaaten:
**AT BE CH DE FR GB IT LI LU NL**

(56) Entgegenhaltungen:
**DE - A - 1 236 864**
**US - A - 2 910 644**
**US - A - 2 913 659**
**US - A - 3 238 447**
**US - A - 3 589 177**
**US - A - 3 703 825**
**US - A - 3 934 566**
**US - A - 4 090 125**

(73) Patentinhaber: **Licentia Patent-Verwaltungs-GmbH,
Theodor-Stern-Kai 1, D-6000 Frankfurt/Main 70 (DE)**

(72) Erfinder: **Kuhrmann, Helmut, Oberherrlinger
Strasse 34/3, D-7906 Blaustein (DE)**
Erfinder: **Schmidt, Lorenz-Peter, Dr.-Ing., Im Wiblinger
Hart 60, D-7900 Ulm (DE)**
Erfinder: **Menzel, Wolfgang, Dr.-Ing., Rehweg 9,
D-7913 Senden (DE)**
Erfinder: **Wippich, Heinz-Georg, Dipl.-Ing.,
Beethovenstrasse 2, D-7913 Senden (DE)**

(74) Vertreter: **Schulze, Harald Rudolf, Dipl.-Ing. et al,
Licentia Patent-Verwaltungs-GmbH
Theodor-Stern-Kai 1, D-6000 Frankfurt/Main 70 (DE)**

## Beschreibung

Die Erfindung betrifft einen Adapter nach dem Oberbegriff des Anspruches 1.

Aus der US-A-3 589 177 ist ein Adapter zwischen einem Sensor und einer Zündkerze, ähnlich dem Oberbegriff des Anspruchs 1, bekannt; dort werden jedoch Mikrowellen (um 4 GHz) und nicht Millimeterwellen verwendet. Der Adapter besteht aus einem Spannkopf, der über die Sechskantmutter der Zündkerze greift und einem längeren hohlen Metallzylinder. Das Zündkabel ist gerade nach oben durch die Symmetrieachse des Metallzylinders geführt und bildet so mit diesem eine Koaxialleitung für die Mikrowellen. Der Porzellan-Isolator der Zündkerze bildet quasi eine Fortführung des Dielektrikums um den Innenleiter (Zündkabel) dieser Koaxialleitung. Die Mikrowellenleistung wird folglich über die gesamte Länge des Porzellan-Isolators in den Verbrennungsraum eingekoppelt.

In der deutschen Patentanmeldung P 32 36 939.5 ist eine Millimeterwellensonde beschrieben zur Bestimmung des oberen Totpunktes bei Kolbenmotoren durch Einstrahlen von Millimeterwellen in den Zylinder und Auswerten des reflektierten Signals.

Aufgabe der Erfindung ist es, für einen solchen Sensor einen Adapter anzugeben zur festen mechanischen Halterung auf einer handelsüblichen Zündkerze, störungsfreien Einkopplung der Millimeterwellen in den Porzellan-Isolator der Zündkerze und durch sie hindurch bei gleichzeitigem Anschluss der Zündspannung zum Betrieb der Zündkerze.

Die Erfindung ist im Patentanspruch 1 gekennzeichnet. Die weiteren Ansprüche beinhalten vorteilhafte Ausführungen der Erfindung.

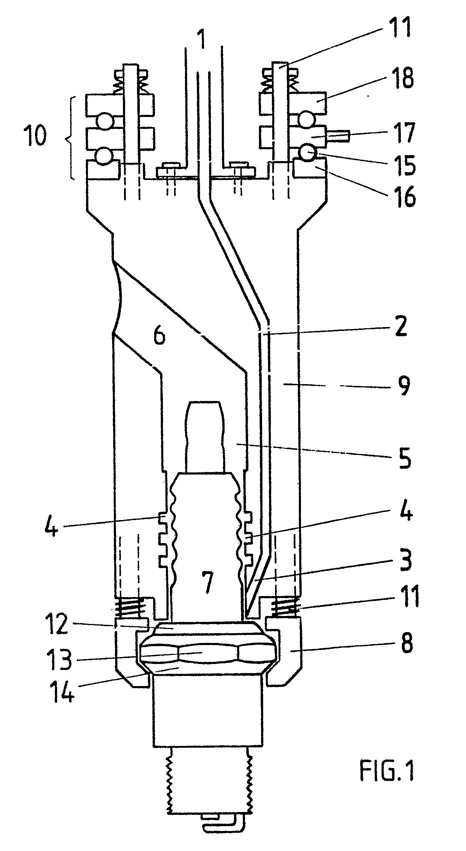

Die Erfindung wird im folgenden anhand der Figur näher erläutert. Die Figur zeigt eine vorteilhafte Ausführungsform der Erfindung.

Der Adapter besteht aus einem Spannkopf 8, welcher um die Sechskantmutter 13 der Zündkerze fasst, einem Metallzylinder 9 und einer Spannvorrichtung 10. Der Millimeterwellen-Sensor 1 wird auf das obere Ende des Metallzylinders 9 aufgeflanscht. Ein Hohlraum 5 im Metallzylinder nimmt den oberen Teil der Zündkerze auf, derart, dass der Zylinder 9 auf dem Kragen 12 des Zündkerzengehäuses aufsitzt. Durch eine schräge Bohrung 6 ist das Hochspannungs-Zündkabel geführt. Ein Hohlleiterzug 2 führt vom Sensor 1 durch den Metallzylinder 9 zum Porzellan-Isolator 7 der Zündkerze.

Zur Vermeidung von Störungen und zusätzlichen Dämpfungen durch den Zündspannungsanschluss mündet der Millimeterwellen-Hohlleiterzug erst kurz oberhalb des Zündkerzengehäuses in den von der Zündkerze ausgefüllten Hohlraum 5. Der flache Einstrahlwinkel 3, der mit der Symmetrieachse in etwa einen Brewsterwinkel bildet, gewährleistet einen reflexionsarmen Übertritt der Millimeterwelle in den Porzellan-Isolator 7. Oberhalb der Mündung 3 des Hohlleiterzugs sind ringförmige Nuten 4 in die Wand des Hohlraums 5 gefräst, die als sogenannte Stromfallen ausgelegt sind und einen Übertritt der Millimeterwellen in den Bereich des Zündspannungsanschlusses verhindern sollen.

Um eine ausreichende mechanische Stabilität und vibrationsfreie Fixierung des Adapters mit angeflanschtem Sensor an der Zündkerze zu erreichen, ist der Adapter mit einer Arretierung versehen, die mit einem Spannkopf 8 über den Sechskant 13 am Zündkerzengehäuse hinübergreift und den Metallzylinder 9 mittels einer Spannvorrichtung 10 fest auf den Kragen 12 des Zündkerzengehäuses presst. Spannkopf 8 und Spannvorrichtung 10 sind durch Verbindungsstangen 11 miteinander verbunden, welche durch den Metallzylinder 9 geführt sind. Der Spannkopf 8 ist so ausgeführt, dass er über den Sechskant 13 hinübergeschoben werden kann, nach einer Verdrehung um 30° am unteren konisch geformten Rand 14 der Zündkerze aufliegt und achsiale Zugkräfte in Richtung zum Zündspannungsanschluss aufnehmen kann.

Die Spannvorrichtung 10 besteht aus drei durch Stahlkugeln 15 auf Abstand gehaltenen Stahlringen 16, 17, 18. In entspannter Stellung ruhen die Kugeln in leichten Einsenkungen des mittleren verdrehbaren Stahlringes. Beim Verdrehen des mittleren Rings 17 werden die Kugeln 15 aus diesen Einsenkungen herausgehoben und bewirken eine Vergrösserung der Abstände zwischen den drei Ringen. Am oberen Ring 18 sind (über Tellerfedern einstellbar gefedert) die Verbindungsstangen 11 befestigt, die diesen Hub auf den Spannkopf 8 übertragen.

Durch diese stabile Anbringung des Adapters an der Zündkerze wird ein guter Millimeterwellen-Übergang ohne seitliche Abstrahlung an der Kontaktstelle zwischen Adapter und Kragen 12 des Zündkerzengehäuses erreicht. Ausserdem werden Störungen bei der Signalauswertung vermieden, die durch Vibration bei losem Sitz des Adapters auf der Zündkerze entstehen könnten.

## Patentansprüche

1. Adapter zwischen einem Millimeterwellen-Sensor (1) und einer handelsüblichen Zündkerze, wobei eine vom Sensor (1) abgestrahlte Millimeterwellenleistung über den Porzellan-Isolator (7) der Zündkerze in einen Verbrennungsraum eingekoppelt und die vom Verbrennungsraum reflektierte Millimeterwellenleistung vom Sensor (1) erfasst wird, insbesondere zur Messung des oberen Totpunktes bei Otto-Motoren, wobei der Adapter aus einem Spannkopf (8) besteht, welcher um die Sechskantmutter (13) der Zündkerze greift, einem Metallzylinder (9), der einen Hohlraum (5) aufweist zur Aufnahme des oberen Teils der Zündkerze sowie einer Spannvorrichtung (10) zum Verspannen von Spannkopf (8) und Metallzylinder (9) um die Sechskantmutter (13) der Zündkerze, gekennzeichnet durch folgende Merkmale:

— An den Hohlraum (5) zur Aufnahme des oberen Teils der Zündkerze schliesst sich eine Bohrung (6) an, die schräg aus dem Metallzylinder (9) herausführt, zum Durchführen des Zündkabels;

— Durch den Metallzylinder (9) ist ein Millimeterwellen-Hohlleiterzug (2) geführt, welcher knapp oberhalb des Kragens (12) des Zündkerzengehäuses im schrägen Einstrahlwinkel (3) in dem vom oberen Teil der Zündkerze ausgefüllten Hohlraum (5) mündet; der Einstrahlwinkel (3) bildet dabei mit der Symmetrieachse der Zündkerze in etwa einen Brewster-Winkel;

— In der Wand des Hohlraums (5) sind oberhalb des Einstrahlwinkels (3) ringförmige Nuten (4) als Stromfallen angebracht.

2. Adapter nach Anspruch 1, dadurch gekennzeichnet, dass der Spannkopf (8) eine Sechskantöffnung aufweist entsprechend der Grösse der Sechskantmutter (13), derart, dass er über diese geführt werden kann und nach einer Verdrehung um vorzugsweise 30° am unteren konisch geformten Rand (14) der Zündkerze aufliegt.

3. Adapter nach Anspruch 1, dadurch gekennzeichnet, dass die Spannvorrichtung (10) am oberen Ende des Adapters angebracht ist, und dass Spannkopf (8) und Spannvorrichtung (10) durch Verbindungsstangen (11) miteinander verbunden sind, welche durch den Metallzylinder (9) hindurchgeführt sind.

4. Adapter nach Anspruch 3, gekennzeichnet durch folgenden Aufbau:

— Die Spannvorrichtung (10) besteht aus drei flachen Stahlringen (16, 17, 18), deren unterer (16) und oberer (18) fest mit dem Metallzylinder (9) bzw. den Verbindungsstangen (11) verbunden ist;

— Der mittlere Stahlring (17) ist mittels Kugeln (15) drehbar gegen den unteren (16) und oberen (18) Ring gelagert;

— Die Kugeln (15) ruhen in entspannter Stellung in leichten Einsenkungen, aus denen sie bei einer Verdrehung des mittleren Rings (17) herausgehoben werden.

## Revendications

1. Adaptateur entre un capteur à ondes millimétriques (1) et une bougie d'allumage du commerce, avec couplage par l'isolant en porcelaine (7) de la bougie de la puissance en ondes millimétriques rayonnée par le capteur (1) dans une chambre de combustion puis détection par le capteur (1) de la puissance en ondes millimétriques réfléchie par la chambre de combustion, en particulier pour la mesure du point mort haut de moteurs à allumage commandé, l'adaptateur étant constitué par une tête de serrage (8) qui se place autour de l'écrou six pans (13) pour la bougie, un cylindre métallique (9) comprenant une cavité (5) pour le logement de la partie supérieure de la bougie et un dispositif de serrage (10) pour le serrage de la tête (8) et du cylindre métallique (9) sur l'écrou six pans (13) de la bougie, ledit adaptateur étant caractérisé en ce que:

— la cavité (5) de logement de la partie supérieure de la bougie se raccorde à un alésage (6) qui sort en oblique du cylindre métallique (9) pour la traversée du câble d'allumage;

— un guide d'ondes millimétriques (2) est guidé dans le cylindre métallique (9) et débouche juste au-dessus de la collerette (12) du corps de la bougie avec un angle aigu d'incidence (3) dans la cavité (5) remplie par la partie supérieure de la bougie, l'angle d'incidence (3) formant sensiblement un angle de Brewster avec l'axe de symétrie de la bougie; et

— des gorges annulaires (4) formant des pièges de courant sont usinées dans la paroi de la cavité (5), au-dessus de l'angle d'incidence (3).

2. Adaptateur selon revendication 1, caractérisé en ce que la tête de serrage (8) présente une ouverture six pans correspondant à la taille de l'écrou six pans (13), de façon à pouvoir se placer sur dernier puis, après une rotation de 30° de préférence, s'appliquer sur le bord inférieur conique (14) de la bougie.

3. Adaptateur selon revendication 1, caractérisé en ce que le dispositif de serrage (10) est fixé à l'extrémité supérieure de l'adaptateur; et la tête (8) et le dispositif (10) de serrage sont reliées par des tiges (11) guidées dans le cylindre métallique (9).

4. Adaptateur selon revendication 3, caractérisé par la constitution suivante:

— le dispositif de serrage (10) est constitué par trois bagues d'acier planes (16, 17, 18), dont les bagues inférieure (16) et supérieure (18) sont solidaires respectivement du cylindre métallique (9) et des tiges de liaison (11);

— la bague d'acier centrale (17) est montée en rotation à l'aide de billes (15) par rapport aux bagues inférieure (16) et supérieure (18); et

— les billes (15) reposent avant le serrage dans de légères empreintes, dont elles sont extraites par une rotation de la bague centrale (17).

## Claims

1. Adapter between a millimetre wave sensor (1) and a commercially usual sparking plug, wherein a millimetre wave energy radiated from the sensor (1) is coupled by way of the porcelain insulator (7) of the sparking plug into a combustion space and the millimetre wave energy reflected from the combustion space is detected by the sensor (1), in particular for the measurement of the upper dead centre in the case of Otto engines, wherein the adapter consists of a clamping head (8), which engages around the hexagonal nut (13) of the sparking plug, a metal cylinder (9), which displays a hollow space (5) for the reception of the upper part of the sparking plug, as well as of a tightening device (10) for the tightening of clamping head (8) around the hexagonal nut (13) of the sparking plug, characterised by the following features:

— Adjoining the hollow space (5) for the reception of the upper part of the sparking plug is a bore (6), which leads obliquely out of the metal cylinder (9), for the feeding through of the ignition cable,

– guided through the metal cylinder (9) is a millimetre wave waveguide train (2); which closely above the collar (12) of the sparking plug housing opens at an oblique incident radiation angle (3) into the hollow space (5) filled out by the upper part of the sparking plug; the incident radiation angle (3) in that case forms about a Brewster angle with the axis of symmetry of the sparking plug;

– annular grooves (4) are applied as flux traps above the incident radiation angle (3) in the wall of the hollow space (5).

2. Adapter according to claim 1, characterised thereby, that the clamping head (8) displays a hexagonal opening corresponding to the size of the hexagonal nut (13) in such a manner that it can be guided over this and after a rotation through preferably 30° rests against the lower, conically shaped rim (14) of the sparking plug.

3. Adapter according to claim 1, characterised thereby, that the tightening device (10) is mounted at the upper end of the adapter and that clamping head (8) and tightening device (10) are each connected with the other through connecting rods (11), which are guided through the metal cylinder (9).

4. Adapter according to claim 3, characterised by the following build-up:

– The tightening device (10) consists of three flat-steel rings (16, 17, 18), the lower (16) and upper (18) of which are firmly connected with the metal cylinder (9) or the connecting rods (11), respectively;

– the middle steel ring (17) is borne by balls (15) to be rotatable relative to the lower (16) and upper (18) ring;

– the balls (15) in relieved setting rest in slight depressions, out of which they are lifted on a rotation of the middle ring (17).

FIG.1